# FASCICULE DE BREVET EUROPEEN

(11) **EP 2 107 042 B1**
(45) Date de publication et mention de la délivrance du brevet: **04.06.2014**
(21) Numéro de dépôt: 09290152.9
(22) Date de dépôt: 03.03.2009
(51) Int. Cl.: C01B 3/32, C01B 3/38, C01B 3/48

(54) **Procédé de production d'hydrogène avec unité de désulfuration intégrée thermiquement**
Herstellungsverfahren von Wasserstoff mit einer thermisch integrierten Entschwefelungseinheit
Method for the production of hydrogen with thermally integrated desulphurisation unit

(30) Priorité: 28.03.2008 US 57576
(43) Date de publication de la demande: 07.10.2009
(73) Titulaire: IFP Energies nouvelles, 92852 Rueil-Malmaison Cedex (FR)
(72) Inventeur: Giroudiere, Fabrice, 69530 Orlienas (FR); Boyer, Christophe, 69390 Charly (FR); Nicolaos, Alexandre, 69003 Lyon (FR); Xu, Jijun, Buffalo Grove, 60089 Illinois (US); Doshi, Kishore, Amelia Island, 32034 Florida (US)

(56) Documents cités:
- WO-A-2004/033367
- WO-A-2005/118126
- WO-A-2006/027175
- US-A- 6 159 256
- US-A1- 2002 090 327

## Description

### DOMAINE DE L'INVENTION

L'invention se situe dans le domaine de la production de gaz riche en hydrogène par reformage d'une charge hydrocarbonée liquide nécessitant auparavant une désulfuration.

L'hydrogène est utilisé comme matière première dans de nombreuses applications chimiques. C'est un combustible alternatif, qui permet d'alimenter par exemple les piles à combustible. Celles-ci sont devenues absolument incontournables dans ce domaine car elles apportent une réponse à la production d'énergie non polluante.

Différents procédés sont utilisés pour la production d'un gaz contenant de l'hydrogène :
- l'oxydation partielle (POX pour Partial Oxydation selon la terminologie anglo-saxonne) est une réaction exothermique très souvent catalysée qui produit de l'hydrogène (H₂) par réaction entre la charge et l'oxygène (O₂) contenu par exemple dans l'air :
   dans le cas du méthane par exemple : CH₄ + ½ O₂ → CO + 2 H₂

Cette réaction est à différencier de l'oxydation totale (TOX pour Total Oxydation) qui ne produit pas d'hydrogène :
dans le cas du méthane par exemple : CH₄ + 2 O₂ → CO₂ + 2 H₂O
   - le vaporeformage (SMR pour Steam Reforming selon la terminologie anglo-saxonne) est une réaction endothermique également catalytique qui produit de l'hydrogène par réaction de la charge avec de l'eau (H₂O) :
dans le cas du méthane par exemple: CH₄ + H₂O → CO + 3 H₂
   - le reformage autotherme (ATR pour Autothermal Reforming selon la terminologie anglo-saxonne) est le couplage de la réaction d'oxydation partielle et du vaporeformage.

L'exothermicité de l'oxydation partielle compensant l'endothermicité du vaporeformage, un reformeur autotherme peut être adiabatique, mises à part les pertes thermiques. Ce mode opératoire est donc important pour la gestion de l'énergie. De plus, il conduit à un gaz de synthèse (mélange de monoxyde de carbone (CO), dioxyde de carbone (CO₂) et d'hydrogène (H₂)) plus riche en hydrogène que l'oxydation partielle. Il est donc préféré dans le cadre de l'invention.

En sortie d'une unité de reformage, le gaz effluent riche en hydrogène contient beaucoup d'impuretés, en particulier du monoxyde de carbone (CO). Celui-ci est particulièrement gênant lorsque ce gaz riche en hydrogène alimente une pile à combustible car le monoxyde de carbone empoisonne le catalyseur des piles. C'est pour cela qu'une unité de purification est installée pour extraire l'hydrogène pur.
Il est connu que le taux de monoxyde de carbone peut être réduit en utilisant la réaction de conversion du monoxyde de carbone à l'eau (WGS pour Water Gas Shift reaction selon la terminologie anglo-saxonne).

CO + H₂O → CO₂ + H₂ (WGS)

Dans cette réaction, la vapeur d'eau utilisée peut être celle présente en excès dans l'effluent ou bien de la vapeur d'eau ajoutée au reformat. Elle nécessite l'emploi d'un catalyseur approprié. Il peut y avoir une ou plusieurs zones catalytiques, combinées ou séparées, à la même température ou à des températures différentes. Il est par exemple courant pour un homme du métier d'utiliser deux zones catalytiques distinctes, une à haute température (de 300 à 560 °C) en amont (Conversion Haute Température ou HT-Shift selon la terminologie anglo-saxonne), une à basse température (de 200 à 260 °C) en aval (Conversion Basse Température ou LT-Shift selon la terminologie anglo-saxonne). En sortie d'un réacteur de conversion du monoxyde de carbone à l'eau, le pourcentage volumique de monoxyde de carbone (CO) est généralement d'environ 0,5 ou supérieur. L'effluent contient aussi de l'eau et du dioxyde de carbone (CO₂). Selon le degré de pureté que l'utilisateur souhaite obtenir, il convient d'utiliser un moyen supplémentaire de purification.
Une possibilité est d'employer un système de purification par adsorption (PSA pour Pressure Swing Adsorption selon la terminologie anglo-saxonne). Cette technologie permet d'obtenir de l'hydrogène de très haute pureté (supérieure à 99,9 % vol) à partir d'un reformat après conversion du monoxyde de carbone. Le PSA est fondé sur le principe d'adsorption des impuretés sur des lits de tamis moléculaires. La régénération est obtenue par détente du lit d'adsorption et balayage par un gaz de purge interne. La continuité du système est assurée par l'installation en parallèle de plusieurs ballons.
Une autre possibilité consiste en une réaction d'oxydation préférentielle (PrOx pour Preferential Oxydation selon la terminologie anglo-saxonne).

CO + ½ O₂ → CO₂ (PrOx)

Cette réaction est menée dans un réacteur contenant un catalyseur adéquat, à une température qui privilégie l'oxydation du monoxyde de carbone avec l'oxygène de l'air en présence d'hydrogène mais sans consommer ou oxyder des quantités substantielles d'hydrogène, ni conduire à la réaction inverse de la conversion du monoxyde de carbone à l'eau (RWGS pour Reverse Water Gas Shift selon la terminologie anglo-saxonne).
Une purification par membrane est aussi un système utilisé fréquemment.

Les procédés de production d'hydrogène à grande échelle servent principalement aux industries qui ont besoin d'hydrogène pur pour certaines opérations chimiques, ou à l'approvisionnement de piles à combustible stationnaires. L'avantage de ces grandes installations est la possibilité de maximiser le rendement en hydrogène en intégrant très fortement et de façon complexe toutes les unités de l'installation. Il est également possible d'utiliser des matériaux de construction coûteux mais résistant aux très hautes températures.
Les procédés de production d'hydrogène pur de petite taille sont une réponse au problème du transport et du stockage de l'hydrogène. De petites unités, moins coûteuses et plus mobiles, permettent d'avoir une source d'hydrogène à proximité de l'installation qui en a besoin.

Une charge hydrocarbonée sous forme liquide, comme par exemple l'éthanol, est plus facile à manipuler pour un utilisateur qu'une charge gazeuse. Cependant, l'utilisation d'une charge liquide pose le problème supplémentaire de la vaporisation de cette charge. En effet, avant d'entrer dans le reformeur autotherme, la charge doit être sous forme de vapeur et mélangée à la vapeur d'eau et à l'air. Le procédé doit donc, d'une part vaporiser la charge liquide, et d'autre part produire la vapeur d'eau nécessaire à la réaction. Il est difficile dans ces conditions de concevoir un procédé totalement autotherme sans pour autant diminuer le rendement en hydrogène pur de l'installation.
De plus, la charge hydrocarbonée liquide contient très souvent des substances indésirables comme des sulfures ou des chlorures. Par exemple, pour des raisons juridiques, l'éthanol qui n'est pas utilisé dans le secteur alimentaire est dénaturé par ajout d'une substance chimique appelée dénaturant et qui le rend impropre à la consommation. Le dénaturant peut être de l'essence, comme par exemple aux États-unis, ou bien du thiophène. La présence de ces composés soufrés et chlorés dans la charge hydrocarbonée est très dérangeante car ils peuvent empoisonner les catalyseurs utilisés pour le reformage, en particulier les catalyseurs présents dans le réacteur de reformage et dans le réacteur de conversion du monoxyde de carbone à l'eau. De plus, ils peuvent également se retrouver dans l'hydrogène produit et désactiver les catalyseurs des piles à combustible fonctionnant avec ledit hydrogène.

Différentes méthodes pour retirer les composés soufrés des hydrocarbures sont bien connus de l'homme du métier. Généralement, les composés soufrés sont d'abord hydrolysés dans un réacteur catalytique et converti en hydrogène sulfuré (H₂S). Le passage du gaz dans un réacteur de reformage a aussi pour conséquence la conversion des composés soufrés en hydrogène sulfuré. Cet hydrogène sulfuré (H₂S) est ensuite capturé par un lit adsorbant constitué généralement d'oxyde de zinc ou de fer, mais aussi bien de zéolite ou de nickel.

### ART ANTERIEUR

De nombreux procédés de désulfuration de charges hydrocarbonées liquides ou gazeuses sont décrits dans l'art antérieur.
Le procédé de désulfuration d'une charge hydrocarbonée proposé dans la demande de brevet WO 2006/065459 utilise un ou plusieurs réacteurs contenant un catalyseur d'hydrolyse pour hydrolyser au moins un composé soufré et un matériau adsorbant pour retirer l'hydrogène sulfuré de la charge. Le procédé de désulfuration décrit dans la demande de brevet EP 0421500 utilise également un catalyseur d'hydrolyse suivi cette fois d'un catalyseur permettant la conversion de l'hydrogène sulfuré en soufre élémentaire. Le procédé de désulfuration décrit dans le brevet US 5882614 quant à lui met en oeuvre deux adsorbants chimiques différents, l'un à la suite de l'autre, pour retirer au mieux les composés soufrés d'une charge hydrocarbonée gazeuse.

Certains brevets de l'art antérieur proposent en outre un couplage du procédé de désulfuration avec un procédé de reformage visant à la production d'un gaz riche en hydrogène.
La demande de brevet WO 2004/033367 propose un procédé de production continue d'hydrogène à partir de charges hydrocarbonées typiquement gazeuses contenant des composés soufrés. Pour purifier la charge avant son reformage, ladite charge est mise en contact avec un des lits catalytiques adsorbants de façon réversible certaines espèces soufrées. Pendant ce temps, le catalyseur du ou des autres lits est régénéré grâce à un gaz de régénération. Alternativement, les différents lits catalytiques sont régénérés, ce qui permet un fonctionnement en continu du procédé.
Le brevet US 6159256 décrit une méthode de désulfuration d'une charge hydrocarbonée grâce à un réacteur contenant du nickel qui converti les composés soufrés en sulfure de nickel. Le gaz riche en hydrogène produit peut être utilisé comme combustible par une pile à combustible, après avoir été purifié. Ce système de réacteur contenant du nickel permet de concevoir une unité de production d'hydrogène de petite taille car un seul réacteur de dimension correcte pour une installation portative suffit à désulfurer la charge hydrocarbonée. Ce réacteur de désulfuration fonctionne à une température comprise entre 250 °F et 525 °F, soit environ entre 120 °C et 275 °C.
La demande de brevet EP 1236495 propose une solution au problème causé par le démarrage d'une installation de désulfuration d'une charge hydrocarbonée destinée à la production d'hydrogène. L'invention consiste en un réacteur de piégeage des composés soufrés actif à basse température, c'est-à-dire au dessous de 75 °C.

WO 2005/118126 A1 décrit un réacteur d'oxidation catalytique/vaporeformage dans lequel l'effluent du réacteur est utilisé pour préchauffer l'alimentation dudit réacteur, réalisant ainsi une intégration thermique du procédé.

US 2002/027175 A1 et WO 2006/027175 A1 décrivent deux procédés thermiquement intégrés permettant de produire de l'hydrogène à partir d'une charge hydrocarbonée.

### DESCRIPTION SOMMAIRE DE L'INVENTION

L'invention concerne un procédé de production d'hydrogène intégré thermiquement à partir d'une charge hydrocarbonée liquide contenant des composés soufrés comprenant :
- une étape a dans laquelle la charge hydrocarbonée liquide est chauffée, jusqu'à une température comprise entre 60°C et 150°C, par échange thermique indirect avec un flux chaud sélectionné parmi les flux suivants : le flux sortant du reformeur autotherme préalablement refroidi par échange thermique avec un ou plusieurs autres flux, le flux sortant du réacteur de conversion du monoxyde de carbone à l'eau, le flux sortant du réacteur de conversion du monoxyde de carbone à l'eau préalablement refroidi par échange thermique avec un ou plusieurs autres flux ,
- une étape b dans laquelle ladite charge hydrocarbonée chauffée lors de l'étape a est introduite dans une unité de désulfuration et en ressort ,
- une étape c dans laquelle ladite charge hydrocarbonée issue de l'étape b est vaporisée par échange thermique indirect avec le flux chaud sortant du reformeur autotherme ;
- une étape d dans laquelle ladite charge hydrocarbonée vaporisée issue de l'étape c est soumise à un reformage autotherme en présence d'eau et d'une source d'oxygène, afin de produire un flux gazeux riche en hydrogène ;
- une étape e dans laquelle le flux issu de l'étape d est introduit dans un réacteur de conversion du monoxyde de carbone à l'eau de façon à réduire la teneur en monoxyde de carbone dans le gaz riche en hydrogène produit.

### DESCRIPTION SOMMAIRE DES FIGURES

La figure 1 est un schéma de procédé représentant une variante d'installation de reformage d'une charge hydrocarbonée liquide selon l'invention.

La figure 2 est un schéma de procédé représentant une seconde variante d'installation de reformage d'une charge hydrocarbonée liquide selon l'invention.

La figure 3 est un schéma de procédé représentant une troisième variante d'installation de reformage d'une charge hydrocarbonée liquide selon l'invention.

### DESCRIPTION DÉTAILLÉE DE L'INVENTION

L'invention est adaptée au reformage de charges hydrocarbonées liquides. Il peut s'agir d'hydrocarbures, de coupes pétrolières ou d'alcools, comme par exemple l'éthanol, ou enfin des mélanges de ceux-ci. Un carburant potentiellement intéressant est le bioéthanol. Ce biocarburant est présenté comme une alternative énergétique durable. Il est obtenu par fermentation ou distillation des matières premières végétales telles que, par exemple, le saccharose ou l'amidon. Il a l'avantage de présenter un taux d'émission de gaz à effet de serre très bas. La charge hydrocarbonée peut contenir des composés soufrés tels que des composés de formule chimique RSH ou R désigne généralement un groupe alkyle ou alcool, mais aussi des thiophènes (C₄H₄S). Ceux-ci peuvent empoisonner les catalyseurs utilisés pour le reformage, en particulier les catalyseurs présents dans le réacteur de reformage et dans le réacteur de conversion du monoxyde de carbone à l'eau. C'est pour cela que la charge est désulfurée avant son reformage.
En plus de la charge hydrocarbonée, le procédé requiert un apport d'eau. Celle-ci est de préférence désionisée. La réaction de reformage étant un reformage autotherme, une source d'oxygène est nécessaire à la réaction. Celle-ci peut être de l'oxygène pur, de l'air ou de l'air enrichi en oxygène.

Dans un premier temps (étape a), la charge hydrocarbonée liquide est chauffé par échange thermique indirect avec un des flux chauds suivants : le flux sortant du reformeur autotherme préalablement refroidi par échange thermique avec un ou plusieurs autres flux, le flux sortant du réacteur de conversion du monoxyde de carbone à l'eau, le flux sortant du réacteur de conversion du monoxyde de carbone à l'eau préalablement refroidi par échange thermique avec un ou plusieurs autres flux. L'échangeur de chaleur est positionné et dimensionné par l'homme du métier de manière à ce que la charge hydrocarbonée atteignent en sortie de l'échangeur une température comprise entre 60 °C et 150 °C.

La charge hydrocarbonée liquide ainsi chauffée est mise en contact lors de l'étape b avec au moins un lit de catalyseur permettant la réaction puis l'adsorption des composés soufrés contenu à l'intérieur d'un réacteur de désulfuration. Le catalyseur comprend de façon préférée un support et un élément sélectionné parmi le nickel et le cuivre. De manière plus préférée, le nickel est utilisé.

Préférentiellement, ledit élément est au moins partiellement réduit à l'état métallique (c'est-à-dire qu'au moins 30 %poids, de préférence au moins 50 % poids et de manière très préférée au moins 70 %poids, voire au moins 80 %poids de cet élément est réduit à l'état métallique). Cette réduction s'effectue de préférence à une température supérieure à 100°C, et plus préférentiellement jusqu'à au moins 180 °C.

Ledit catalyseur peut être massique (30 à 60 % poids de nickel typiquement) ou bien imprégné sur un support, par exemple de l'alumine (20 à 30 % poids de nickel typiquement). Tout autre support de catalyseur connu de l'homme du métier est également possible, tel que par exemple du charbon, des zéolites, ou de la silice.

Il est également possible de mettre en oeuvre un enchaînement de plusieurs solides, par exemple un adsorbant puis un catalyseur pour une meilleure efficacité envers le thiophène. Pour retirer les composés aromatiques tels que le thiophène, l'adsorbant utilisé avant le catalyseur peut préférentiellement être de l'alumine activée ou du gel de silice, ou du charbon actif activé chimiquement, de la zéolite échangée avec des métaux alcalins. Le charbon activé est très préférentiellement utilisé.

Dans le procédé selon l'invention, la charge hydrocarbonée peut donc préférentiellement être introduite à l'étape b dans une unité de désulfuration comprenant un adsorbant localisé en amont dudit catalyseur.

La désulfuration par adsorption réactive s'effectue essentiellement par sulfuration du nickel réduit. Cela correspond à la réaction suivante, dans le cas des espèces de type RSH:

Ni + RSH → NiS + RH

Cette réaction produit des alcanes ou des alcools correspondants à la nature du composé RSH. Le thiophène quant à lui se chimisorbe en surface.
Les composés chlorés potentiellement présents dans la charge hydrocarbonée peuvent poser un problème supplémentaire car ils peuvent comme les composés soufrés désactiver les catalyseurs de l'ensemble du procédé. Pour améliorer la durée de vie desdits catalyseurs, il est envisagé de disposer dans le réacteur de désulfuration des alumines modifiées pour éliminer les composés chlorés.
L'adsorption des sulfures dans une phase liquide est généralement plus facile à mettre en oeuvre que dans une phase gazeuse ; en effet, les volumes utiles sont plus petits. L'adsorption sur solide des espèces soufrées dépend de la température. L'adsorption s'effectue généralement à une température comprise entre 15 °C et 250 °C, de façon préférée entre 20 °C et 200 °C, de façon encore plus préférée entre 60 °C et 150 °C.

La mise en oeuvre de cette unité de désulfuration permet d'obtenir un taux de désulfuration assez élevé : supérieur à 80 %, de préférence supérieur à 90 %, voire compris entre 95 % et 100 %. La concentration en composés soufrés dans la charge hydrocarbonée liquide est alors telle qu'elle n'est plus un danger pour le catalyseur contenu dans le réacteur de reformage ni pour le catalyseur contenu dans le réacteur de conversion du monoxyde de carbone à l'eau.

Dans un mode de réalisation préférée, un flux d'eau, sous forme vapeur ou, de façon préférée, sous forme liquide, est additionné à la charge hydrocarbonée liquide sortant du réacteur de désulfuration. De façon préférée, pour maximiser l'intégration thermique du procédé de production d'hydrogène, la quantité d'eau ajoutée à la charge hydrocarbonée liquide est aussi importante que possible dans la mesure où le mélange est totalement vaporisé à l'étape c en utilisant toute la chaleur de l'effluent du reformeur.

Dans un troisième temps (étape c), la charge hydrocarbonée liquide issue du réacteur de désulfuration ou le mélange d'eau et de la charge hydrocarbonée liquide est totalement vaporisé par échange thermique indirect avec le flux chaud sortant du reformeur autotherme. L'échangeur de chaleur est positionné et dimensionné par l'homme du métier de manière à ce que la charge hydrocarbonée ou le mélange eau et charge hydrocarbonée en sortie de l'échangeur soit totalement vaporisé. Il est en général dommageable pour le réacteur de reformage qu'un mélange diphasique liquide et gaz soit injecté en entré dudit réacteur car la présence de gouttelettes peut généralement entraîner une chute du taux de reformage et une perte d'activité du catalyseur. En sortie de l'échangeur de chaleur, la température de la charge hydrocarbonée vaporisée ou du mélange de vapeur d'eau et de charge hydrocarbonée vaporisée est comprise entre 160 °C et 725 °C (725 °C étant la température maximale admise à cause de la résistance des matériaux), de façon préférée entre 200 °C et 500 °C, de façon encore plus préférée entre 300 °C et 400 °C. Toutefois, il est généralement préféré que la température de la charge hydrocarbonée ou du mélange eau/charge hydrocarbonée ne dépasse pas sa température d'auto-allumage avant d'entrer dans le reformeur.

La charge hydrocarbonée vaporisée ou le mélange de vapeur d'eau et de la charge hydrocarbonée vaporisée issu de l'étape c est injecté dans un réacteur de reformage autotherme (étape d), ainsi que de l'air, préférentiellement chaud et un complément de vapeur d'eau si nécessaire. De façon préférée, la vapeur d'eau nécessaire au reformage autotherme est produite par vaporisation d'eau par échange thermique avec un flux chaud du procédé ; de la même manière, l'air nécessaire au reformage est également chauffé par échange thermique avec un flux chaud du procédé. Ce mode préféré de réalisation permet d'augmenter l'intégration thermique de l'ensemble du procédé. Globalement, une bonne intégration thermique permet d'atteindre un rapport molaire H₂O/C assez élevé (préférentiellement supérieur à 3,0, plus préférentiellement supérieur à 4,0) ce qui permet d'atteindre de bon rendement en hydrogène (préférentiellement supérieur à 60 %, plus préférentiellement supérieur à 64 %) tout en maintenant le procédé autotherme, c'est à dire sans apport d'énergie extérieure.
Lors de l'étape d, la charge hydrocarbonée est mise en contact avec un catalyseur de reformage autotherme. Par exemple, il peut s'agir d'un catalyseur commercial à base de platine et de palladium sur alumine tel que proposé par Engelhard (demande de brevet US 4844837A), ou d'un catalyseur commercial de la société SüdChemie. De manière générale, tout type de catalyseur de reformage autotherme peut être utilisé dans le procédé selon l'invention. Le réacteur de reformage autotherme fonctionne typiquement à une température comprise entre 400 °C et 1000 °C, mais elle sera préférentiellement inférieure à 725 °C, qui est la température limite que peut supporté un matériau peu coûteux. La pression est comprise traditionnellement entre 100 et 4000 kPa
Le reformat, c'est-à-dire l'effluent du réacteur de reformage, est un gaz de synthèse. La température de ce gaz est de préférence supérieure à 300 °C, de façon plus préférée supérieure à 350 °C, de façon encore plus préférée comprise entre 400 °C et 725 °C.
La chaleur de ce reformat sert à vaporiser la charge hydrocarbonée liquide issue du réacteur de désulfuration ou le mélange d'eau et de charge hydrocarbonée liquide au moins en partie désulfurée grâce à un échangeur de chaleur.
Par la suite, la chaleur restante après ce premier échange thermique peut servir à chauffer un ou plusieurs autres flux du procédé, comme par exemple la charge hydrocarbonée liquide avant la désulfuration, ou un flux d'eau servant au procédé, ou un flux d'air servant au procédé.

Le reformat est ensuite introduit lors de l'étape e dans un réacteur de conversion du monoxyde de carbone à l'eau (WGS). Un ajout d'eau au reformat peut être nécessaire, mais reste non obligatoire. Ce réacteur est équipé d'une ou plusieurs zones catalytiques, installées dans une même enceinte ou dans plusieurs enceintes différentes et qui peuvent fonctionner à la même température ou à des températures différentes.
La réaction étant exothermique, l'effluent du réacteur de conversion du monoxyde de carbone à l'eau est généralement refroidi par un ou plusieurs échangeurs. Cette chaleur peut servir à chauffer un ou plusieurs autres flux du procédé, comme par exemple la charge hydrocarbonée liquide avant la désulfuration, ou un flux d'eau servant au procédé, ou un flux d'air servant au procédé.

En sortie du réacteur de conversion du monoxyde de carbone à l'eau, le gaz produit riche en hydrogène contient environ 0,5 % molaire de monoxyde de carbone (CO), ainsi que de l'eau et du dioxyde de carbone (CO₂).

Dans un mode préféré de ce procédé, le gaz riche en hydrogène produit est purifié dans une section de purification. Il est possible d'utiliser un réacteur d'oxydation préférentielle (PrOx). Dans une réalisation préférée de ce procédé, la section de purification comprend un système de PSA ou un système de filtration par membrane. Les gaz impropres rejetés par cette section de purification, nommés "off-gas" selon la terminologie anglo-saxonne, sont brûlés dans un brûleur à gaz. L'hydrogène pur alors obtenu peut servir à tout type d'applications, en particulier à l'alimentation des piles à combustible.

### Variantes préférées de réalisation de l'invention :

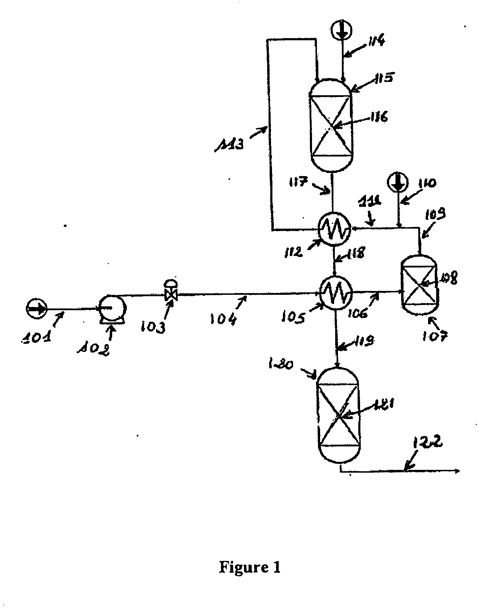

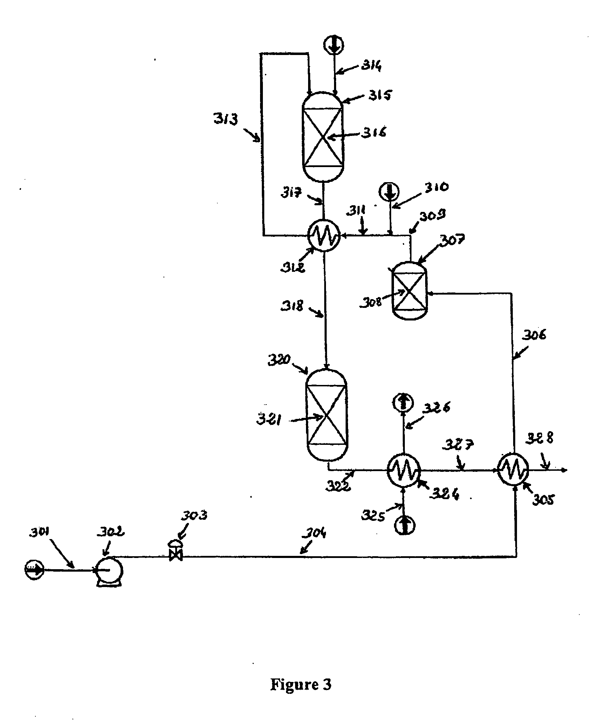

Les figures 1 à 3 représentent trois variantes possibles de réalisations de l'invention, c'est-à-dire un procédé de production d'hydrogène intégré thermiquement dans lequel la charge hydrocarbonée liquide est chauffée par contact thermique préalablement à sa désulfuration par un des flux suivants : le flux sortant du reformeur autotherme préalablement refroidi par échange thermique avec un ou plusieurs autres flux, le flux sortant du réacteur de conversion du monoxyde de carbone à l'eau, le flux sortant du réacteur de conversion du monoxyde de carbone à l'eau préalablement refroidi par échange thermique avec un ou plusieurs autres flux. Chaque variante propose une position différente de l'échangeur de chaleur en question dans le schéma du procédé de production d'hydrogène.
La numérotation des figures 1 à 3 est effectuée sous la forme AXY dans laquelle le A est le numéro de la figure et XY le numéro de l'équipement, par exemple 1XY pour la figure 1 ou 3XY pour la figure 3. Les chiffres X et Y sont identiques pour un même équipement quelle que soit la figure, par exemple 115, 215 et 315 pour le réacteur de reformage respectivement dans les figures 1, 2 et 3.

Selon les références de la figure 1, qui constitue un exemple de réalisation de l'invention, le procédé de production d'hydrogène intégré thermiquement est constitué d'un réacteur de désulfuration 107 de la charge hydrocarbonée liquide, d'un réacteur de reformage autotherme 115, d'un réacteur de conversion du monoxyde de carbone à l'eau (WGS) 120 et de deux échangeurs de chaleurs 105 et 112.
La charge hydrocarbonée liquide, par exemple de l'éthanol, est introduite dans le procédé via la ligne 101 et la pompe 102. Il pénètre dans l'échangeur de chaleur 105 via la ligne 104. Elle est alors réchauffée jusqu'à une température comprise entre 60 °C et 150 °C, par contact avec le flux chaud entrant dans l'échangeur de chaleur 105 par la ligne 118 et en sortant par la ligne 119, qui n'est autre que le flux sortant du reformeur autotherme 115 préalablement refroidi par échange thermique dans l'échangeur 112. La charge hydrocarbonée liquide ainsi chauffée sort de l'échangeur de chaleur 105 par la ligne 106 et pénètre dans le réacteur de désulfuration 107. Elle est alors mise en contact avec un lit catalytique 108 comprenant généralement un catalyseur à base de nickel, contenant par exemple au moins 50 % poids de nickel réduit. Une fois purifié en composés soufrés, la charge hydrocarbonée liquide sort par la ligne 109. Elle est mélangée à un flux d'eau liquide arrivant par la ligne 110. Ce mélange ainsi formé d'eau liquide et de charge hydrocarbonée liquide est amené par la ligne 111 dans l'échangeur de chaleur 112, où il est totalement vaporisé grâce à la chaleur apporté par le flux sortant du reformeur autotherme 115 via la ligne 117. En sortie de l'échangeur de chaleur 112, le mélange d'eau vaporisée et de charge hydrocarbonée vaporisée atteint une température comprise entre 160 °C et 725 °C, de façon préférée entre 200 °C et 500 °C, de façon encore plus préférée entre 300 °C et 400 °C. Il est injecté dans le réacteur de reformage autotherme 115 via la ligne 113. Un flux d'air chaud et d'eau vaporisée est également injecté dans le réacteur de reformage autotherme 115 via la ligne 114. Dans ce réacteur, les flux de charge hydrocarbonée, d'eau et d'air sont mis en contact avec un catalyseur de reformage autotherme 116. Il en résulte un reformat gazeux chaud riche en hydrogène sortant par la ligne 117. Ce reformat est refroidit par deux échangeurs de chaleur successifs 112 et 105 : le premier le met en contact avec le mélange d'eau et de charge hydrocarbonée liquide arrivant par la ligne 111, le second le met en contact avec la charge hydrocarbonée liquide froide arrivant par la ligne 105. Le reformat ainsi refroidi sort de l'échangeur de chaleur 105 par la ligne 119 et entre dans le réacteur de conversion du monoxyde de carbone à l'eau 120. Dans ce réacteur, il est mis en contact avec au moins un lit de catalyseur de conversion du monoxyde de carbone 121. En sortie du réacteur de conversion du monoxyde de carbone 120 est obtenu via la ligne 122 un gaz riche en hydrogène dont la teneur en monoxyde de carbone (CO) est inférieure à 0,6 % molaire, de préférence inférieure à 0,5 % molaire.

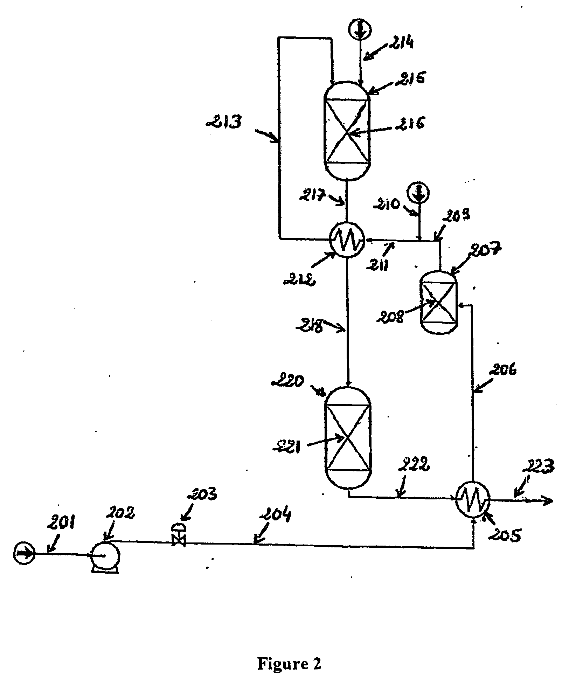

Selon les références de la figure 2, un second exemple de réalisation de l'invention, le procédé de production d'hydrogène intégré thermiquement comprend également un réacteur de désulfuration 207 de la charge hydrocarbonée liquide, un réacteur de reformage autotherme 215, un réacteur de conversion du monoxyde de carbone à l'eau (WGS) 220 et deux échangeurs de chaleurs 205 et 212. La différence par rapport à la figure 1 se situe dans le positionnement de l'échangeur 205 dans le schéma du procédé.
La charge hydrocarbonée liquide, introduite dans le procédé via la ligne 201 et la pompe 202, et qui est réchauffée dans l'échangeur de chaleur 205 est en contact avec le flux chaud sortant par la ligne 222 du réacteur de conversion du monoxyde de carbone à l'eau 220. La charge hydrocarbonée liquide ainsi chauffée sort de l'échangeur de chaleur 205 par la ligne 206 et progresse selon la même route dans le procédé que dans le premier exemple : il pénètre dans le réacteur de désulfuration 207 qui contient au moins un lit catalytique 208 comprenant généralement un catalyseur à base de nickel, contenant par exemple au moins 50 % poids de nickel réduit. Une fois purifié en composés soufrés, la charge hydrocarbonée liquide sort par la ligne 209 et est mélangée à un flux d'eau liquide arrivant par la ligne 210. Le mélange ainsi formé d'eau liquide et de charge hydrocarbonée liquide est amené par la ligne 211 dans l'échangeur de chaleur 212, où il est totalement vaporisé grâce à la chaleur apporté par le flux sortant du reformeur autotherme 215 via la ligne 217. Il est injecté dans le réacteur de reformage autotherme 215 contenant un catalyseur de reformage autotherme 216 via la ligne 213. Un flux d'air chaud et d'eau vaporisée est également injecté dans le réacteur de reformage autotherme 215 via la ligne 214. Un reformat gazeux chaud riche en hydrogène sort par la ligne 217 du réacteur de reformage 215. Ce reformat est refroidit par l'échangeur de chaleur 212 qui le met en contact avec le mélange de charge hydrocarbonée liquide et d'eau arrivant par la ligne 211. Le reformat ainsi refroidi sort par la ligne 218 et entre dans le réacteur de conversion du monoxyde de carbone à l'eau 220 qui contient un catalyseur 221 adapté. En sortie du réacteur de conversion du monoxyde de carbone 220 est obtenu via la ligne 222 un gaz riche en hydrogène chaud. Cette chaleur est échangée avec la charge hydrocarbonée liquide froide avant sa désulfuration grâce à l'échangeur de chaleur 205. Le gaz riche en hydrogène refroidi dont la teneur en monoxyde de carbone (CO) est inférieure à 0,6 % molaire, de préférence inférieure à 0,5 % molaire s'échappe par la ligne 223.

La variante du procédé de production d'hydrogène selon l'invention proposée dans la figure 3 presque identique à la variante proposée dans la figure 2 sauf dans la phase finale du traitement du gaz riche en hydrogène.
Selon les références de la figure 3, le gaz chaud riche en hydrogène sortant du réacteur de conversion du monoxyde de carbone à l'eau 320 par la ligne 322 est d'abord refroidi par échange thermique indirect dans un échangeur de chaleur supplémentaire 324. La chaleur du gaz chaud riche en hydrogène permet de chauffer un flux entrant par la ligne 325 et sortant par la ligne 326. Dans le but d'optimiser l'intégration thermique du procédé, ce flux est de préférence un flux d'eau liquide vaporisé, ou un flux de vapeur d'eau surchauffé, ou un flux d'air chauffé, qui est utile au procédé de production d'hydrogène, par exemple en étant introduit dans le réacteur de reformage, par exemple via la ligne 314. Le gaz riche en hydrogène sortant refroidi de l'échangeur de chaleur 324 par la ligne 327 est encore suffisamment chaud pour permettre de réchauffer la charge hydrocarbonée liquide froide avant sa désulfuration grâce à l'échangeur de chaleur 305. Le gaz riche en hydrogène refroidi dont la teneur en monoxyde de carbone (CO) est inférieure à 0,6 % molaire, de préférence inférieure à 0,5 % molaire s'échappe par la ligne 328.

## Revendications

1. Procédé de production d'hydrogène intégré thermiquement à partir d'une charge hydrocarbonée liquide contenant des composés soufrés comprenant :
- une étape a dans laquelle la charge hydrocarbonée liquide est chauffée, jusqu'à une température comprise entre 60°C et 150°C, par échange thermique indirect avec un flux chaud sélectionné parmi les flux suivants : le flux sortant du reformeur autotherme préalablement refroidi par échange thermique avec un ou plusieurs autres flux, le flux sortant du réacteur de conversion du monoxyde de carbone à l'eau, le flux sortant du réacteur de conversion du monoxyde de carbone à l'eau préalablement refroidi par échange thermique avec un ou plusieurs autres flux,
- une étape b dans laquelle ladite charge hydrocarbonée chauffée lors de l'étape a est introduite dans une unité de désulfuration et en ressort ,
- une étape c dans laquelle ladite charge hydrocarbonée issue de l'étape b est vaporisée par échange thermique indirect avec le flux chaud sortant du reformeur autotherme ;
- une étape d dans laquelle ladite charge hydrocarbonée vaporisée issue de l'étape c est soumise à un reformage autotherme en présence d'eau et d'une source d'oxygène, afin de produire un flux gazeux riche en hydrogène ;
- une étape e dans laquelle le flux issu de l'étape d est introduit dans un réacteur de conversion du monoxyde de carbone à l'eau de façon à réduire la teneur en monoxyde de carbone dans le gaz riche en hydrogène produit.

2. Procédé selon la revendication 1 dans lequel la charge hydrocarboné liquide est de l'éthanol.

3. Procédé selon l'une des revendications 1 à 2 dans lequel la température de la charge hydrocarbonée vaporisée en sortie de l'échangeur de chaleur de l'étape c est comprise entre 160 °C et 725 °C.

4. Procédé selon l'une des revendications 1 à 3 dans lequel la température de la charge hydrocarbonée vaporisée en sortie de l'échangeur de chaleur de l'étape c est comprise entre 300 °C et 400 °C.

5. Procédé selon l'une des revendications 1 à 4 dans lequel la température du flux gazeux riche en hydrogène en sortie du réacteur de reformage autotherme à l'étape d est comprise entre 300 °C et 725 °C.

6. Procédé selon l'une des revendications 1 à 5 dans lequel la charge hydrocarbonée est introduite à l'étape b dans une unité de désulfuration contenant un catalyseur comprenant un support et un élément sélectionné parmi le nickel et le cuivre, et dans lequel au moins 30%poids de cet élément est réduit à l'état métallique.

7. Procédé selon la revendication 6 dans lequel la charge hydrocarbonée est introduite à l'étape b dans une unité de désulfuration comprenant un adsorbant localisé en amont dudit catalyseur.

8. Procédé selon l'une des revendications 1 à 7 dans lequel un flux d'eau sous forme liquide est additionné à la charge hydrocarbonée liquide sortant du réacteur de désulfuration entre l'étape b et l'étape c.

## Patentansprüche

1. Verfahren zur integrierten thermischen Herstellung von Wasserstoff aus einer flüssigen Kohlenwasserstoffbeschickung, enthaltend Schwefelverbindungen, umfassend:
- einen Schritt a, in dem die flüssige Kohlenwasserstoffbeschickung bis auf eine Temperatur im Bereich zwischen 60 °C und 150 °C durch indirekten Wärmeaustausch mit einem warmen Strom erwärmt wird, ausgewählt aus den folgenden Strömen: dem aus dem autothermen Reformer austretenden Strom, der vorher durch Wärmeaustausch mit einem oder mehreren anderen Strömen abgekühlt wurde, dem aus dem Reaktor zur Umwandlung von Kohlenmonoxid mit Wasser austretenden Strom, dem aus dem Reaktor zur Umwandlung von Kohlenmonoxid mit Wasser austretenden Strom, der vorher durch Wärmeaustausch mit einem oder mehreren anderen Strömen abgekühlt wurde,
- einen Schritt b, in dem die in Schritt a erwärmte Kohlenwasserstoffbeschickung in eine Entschwefelungseinheit eingeführt wird und wieder herauskommt,
- einen Schritt c, in dem die aus Schritt b kommende Kohlenwasserstoffbeschickung durch indirekten Wärmeaustausch mit dem aus dem autothermen Reformer austretenden warmen Strom verdampft wird;
- einen Schritt d, in dem die aus Schritt c kommende verdampfte Kohlenwasserstoffbeschickung einer autothermen Reformierung in Gegenwart von Wasser und einer Sauerstoffquelle unterzogen wird, um einen wasserstoffreichen, gasförmigen Strom zu erzeugen;
- einen Schritt e, in dem der aus Schritt d kommende Strom in einen Reaktor zur Umwandlung von Kohlenmonoxid mit Wasser eingeführt wird, um den Kohlenmonoxidgehalt in dem erzeugten wasserstoffreichen Gas zu reduzieren.

2. Verfahren nach Anspruch 1, in dem die flüssige Kohlenwasserstoffbeschickung Ethanol ist.

3. Verfahren nach einem der Ansprüche 1 bis 2, in dem die Temperatur der verdampften Kohlenwasserstoffbeschickung am Ausgang des Wärmetauschers aus Schritt c im Bereich zwischen 160 °C und 725 °C liegt.

4. Verfahren nach einem der Ansprüche 1 bis 3, in dem die Temperatur der verdampften Kohlenwasserstoffbeschickung am Ausgang des Wärmetauschers aus Schritt c im Bereich zwischen 300 °C und 400 °C liegt.

5. Verfahren nach einem der Ansprüche 1 bis 4, in dem die Temperatur des wasserstoffreichen, gasförmigen Stroms am Auslass des Reaktors zur autothermen Reformierung aus Schritt d im Bereich zwischen 300 °C und 725 °C liegt.

6. Verfahren nach einem der Ansprüche 1 bis 5, in dem die Kohlenwasserstoffbeschickung in Schritt b in eine Entschwefelungseinheit eingeführt wird, enthaltend einen Katalysator, umfassend einen Träger und ein Element, ausgewählt aus Nickel und Kupfer, und in dem mindestens 30 Gew.-% dieses Elements auf den metallischen Zustand reduziert ist.

7. Verfahren nach Anspruch 6, in dem die Kohlenwasserstoffbeschickung in Schritt b in eine Entschwefelungseinheit eingeführt wird, umfassend ein Adsorptionsmittel, das stromaufwärts des Katalysators angeordnet ist.

8. Verfahren nach einem der Ansprüche 1 bis 7, in dem ein Strom aus Wasser in flüssiger Form zu der flüssigen Kohlenwasserstoffbeschickung gegeben wird, die aus dem Entschwefelungsreaktor zwischen Schritt b und Schritt c austritt.

## Claims

1. Process for the production of hydrogen that is integrated thermally from a liquid hydrocarbon feedstock that contains sulfur-containing compounds that comprise:
- A stage a wherein the liquid hydrocarbon feedstock is heated until a temperature ranging between 60°C and 150°C, by indirect heat exchange with a hot stream selected from among the following streams: the stream that exits from the autothermal reformer that was previously cooled by heat exchange with one or more other streams, the stream that exits from the reactor for converting carbon monoxide with water, and the stream that exits from the reactor for converting carbon monoxide with water that was previously cooled by heat exchange with one or more other streams,
- A stage b wherein said hydrocarbon feedstock, heated during stage a, is introduced into a desulfurization unit and exits therefrom,
- A stage c wherein said hydrocarbon feedstock that is obtained from stage b is evaporated by indirect heat exchange with the hot stream that exits from the autothermal reformer;
- A stage d wherein said evaporated hydrocarbon feedstock, obtained from the stage c, is subjected to an autothermal reforming in the presence of water and a source of oxygen, so as to produce a hydrogen-rich gaseous stream;
- A stage e wherein the stream that is obtained from stage d is introduced into a reactor for converting carbon monoxide with water so as to reduce the content of carbon monoxide in the hydrogen-rich gas that is produced.

2. Process according to claim 1, wherein the liquid hydrocarbon feedstock is ethanol.

3. Process according to one of claims 1 to 2, wherein the temperature of the evaporated hydrocarbon feedstock at the outlet of the heat exchanger of stage c is between 160°C and 725°C.

4. Process according to one of claims 1 to 3, wherein the temperature of the evaporated hydrocarbon feedstock at the outlet of the heat exchanger of stage c is between 300°C and 400°C.

5. Process according to one of claims 1 to 4, wherein the temperature of the hydrogen-rich gaseous stream at the outlet of the autothermal reforming reactor in stage d is between 300°C and 725°C.

6. Process according to one of claims 1 to 5, wherein the hydrocarbon feedstock is introduced in stage b into a desulfurization unit that contains a catalyst comprising a support and an element selected in the group consisting of nickel and copper, and wherein at least 30 wt% of said element being reduced to metallic state.

7. Process according to claim 6 wherein the hydrocarbon feedstock is introduced in stage b into a desulfurization unit comprising an adsorbent located upstream of said catalyst.

8. Process according to one of claims 1 to 7, wherein a stream of water in liquid form is added to the liquid hydrocarbon feedstock that exits from the desulfurization reactor between stage b and stage c.
